# EUROPEAN PATENT APPLICATION

(11) **EP 1 942 646 A2**
(43) Date of publication of application: **09.07.2008**
(21) Application number: 07024489.2
(22) Date of filing: 18.12.2007
(51) Int. Cl.: H04M 3/56

(54) **Multimedia conferencing method and signal**

(30) Priority: 08.01.2007 US 650698
(71) Applicant: AVAYA TECHNOLOGY LLC, Basking Ridge, NJ 07920-2332 (US)
(72) Inventor: Boyer, David G., 07757 Oceanport, New Jersey (US); Moore, Sean Samuel Butler, 03049 Hollis, New Hampshire (US)
(74) Representative: Tergau & Pohl Patentanwälte

(57) **Abstract**

A method for providing signals in a conference call among a plurality of participants, and a signal used in the method. The participants on the call are ordered in a sequential ring, and inputs, representing audio and/or video input, are taken from at least some of the participants in the ring during succeeding time intervals. The inputs are placed in a signal that contains header information specifying the location of inputs in the signal, and the participant from whom the input was taken. That signal is circulated about the ring during which each participant replaces its input in the signal from the prior cycle with a current input. The combined signal is then played to the participant.

## Description

### 1. Field of the Invention

The present invention is directed to the field of telephonic conference calls, and, more particularly, to a method for conferencing together a large number of voice endpoints, e.g., telephones, while using minimal computational and network resources.

### 2. Description of the Related Art

Traditionally, telephonic communications have been modeled as two-party calls between telephones. That is, telephone communications are established between two equal telephones, each serving both as a transmitter and a receiver of voice signals between one telephone and the other. The call control system that establishes and manages the connection between the telephones may be embodied locally in each telephone or embodied in a remote resource that is able to communicate with the telephones over some network. Eventually, however, it became possible to "conference" together more than two participants, or establish a multi-party call.

It is useful to model a conference call system as consisting of two modules, often referred to as the control plane and the media plane. The control plane handles the control signaling that occurs during a conference call. The media plane handles the distribution of the media (audio, video, and/or text) among the conference call participants during a conference call. As a conference call consists of multiple sources of media that may be active simultaneously, media from multiple sources may be "mixed" together, or combined in some way appropriate for the media type. The mixing model is often considered to be part of the media plane, and the resource or resources that perform mixing often influence the design of the media plane and the operation of the control plane.

Models, or architectures, for both planes have followed three different paradigms to date. According to the first paradigm, separate, direct, communication links are established between each of the participants in the conference call. Each of these links is permitted to proceed simultaneously, so that if there are four members of a call, for example, each member is connected directly to the other three participants. Such an architecture is often referred to as a "full mesh". In a full mesh, each participant transmits control signals and/or media to all other participants simultaneously. While this design is simple and straightforward to implement, it is inefficient with respect to usage of computational and transmission resources, particularly in the media plane; hence, a full-mesh architecture is appropriate for a conference consisting of a small number of participants, e.g., five or fewer participants, but becomes impractical as the number of participants increases.

Another architecture is the "star", wherein each participant of the conference communicates with a shared, "centralized" conferencing server. Thus, multiple communication links are established in a "spoke and wheel" relationship so that each participant has a single connection to the central server. In the control plane, the server manages the control signals required to operate the conference. Typically each participant sends and receives control signals to/from the server only, i.e., a participant does not send control signals directly to other participants. In the media plane, the server functions as the mixer for the conference, so each participant sends locally sourced media to the server. The server receives the media from all of the participants *(i.e.,* the individual telephones), mixes together all of the results of these individual telephone calls, and transmits the mixed signal to each participant. Each participant receives the mixed signal and may play it out locally in order to provide a human user with a full conference experience. The star architecture is effective and scales reasonably well; however, it does require that a central server be acquired and hosted by some organization and then made available (often for a fee) to the participants. In the media plane, the usage of mixing and network resources at the central server grows with the number of participants in a call; hence, a central server capable of serving many participants may be expensive, plus the hosting organization needs to ensure that sufficient network bandwidth is available (*i.e.,* that they purchase sufficient network transmission services) to receive and transmit media flows to all of the participants. A third architecture is the tree, in which the connections between the participants form a tree graph, *i.e.,* a graph without any cycles. Note that the star is a special case of a tree. In a tree, each participant may be connected to one or more other participants and is responsible for receiving control signals and media from some of the participants and sending control signals and media to some other participants. In practice, trees may be logically implemented by using IP multicast or by using so-called "application-level" multicast. Tree architectures may be effective and can be designed to have good scaling properties with respect to the number of participants; however, they require that all participants have multicast control logic, which may be complex, and also require that all participants be able to mix multiple media flows and hence contain mixing logic. Furthermore, IP multicast requires that the underlying IP-based network routers support it, but in fact many service providers do not provide IP multicast support in their networks (or they disable it), and hence IP multicast is typically not available in wide-area networks, or WANs.

It should be noted that for a given conferencing system, the architectures of the control plane and the media plane do not necessarily coincide. For example, practical designs for so-called "peer-to-peer" conferencing systems may use a full-mesh architecture for the control plane and a tree for the media plane, e.g., it may use multicast to distribute the media.

Hence, traditional conferencing systems are expensive or impractical at scale in some form or another, which limits the deployment and availability of conferencing, especially for real-time media applications such as voice and video. As real-time communications solutions become more ubiquitous, mobile, and personal for two-party calls, the need for inexpensive, available, and scalable conferencing grows. New models and architectures, particularly in the media plane, are needed in order to meet the demand for multimedia conferencing.

### SUMMARY OF THE INVENTION

Briefly stated, the invention is directed to a method for providing conference calls that minimizes resource usage, that scales, and that is readily available because it is based on existing and widely available technologies, protocols, and network configurations. Furthermore, the invention increases the flexibility of mixing models, allowing for a richer conferencing experience and providing human users with improved and locally controllable quality-of-experience.

According to the invention, the inventive method provides for establishing in the media plane a "ring" network of conference call participants in which each participant is connected, in series, to only two of the other participants: a "preceding" participant and a "succeeding" participant. The control plane may also use a ring architecture or any of the architectures discussed above. In the following description, the control plane architecture is assumed to be a star, with the central node being the location of the control system server. According to the invention, each participant has a sample taken of the sound (and/or video and/or text) generated at his or her location during a given local time interval. That sample is sent along the ring in a signal packet, and is transmitted to the succeeding participant, which has its own sample taken during a similar local time interval. A receiving participant permits an audio and/or video output corresponding to the samples taken from the preceding participants in the ring during corresponding time intervals. Mixing technology permits the mixing of these samples at a receiving participant's location. Because signal packets in effect continually traverse the ring, a packet received by a participant contains an old sample inserted by said participant when the packet was previously received by the participant at an earlier time. A receiving participant removes its old sample from the just-received packet, copies the payload contents (samples inserted by other participants) to local memory in order to process it for local playout, and inserts a new sample in the signal packet's payload without writing over samples placed in the signal packet by other participants. The receiving participant then sends the combined signal to the next succeeding participant, which executes a similar process of removing its old sample from the payload, copying the payload into local memory in order to process it for local playout, inserting a new sample into the packet payload, and forwarding the packet on to the next participant; and so on. This process continues for as many cycles around the ring as are necessary to complete the conference call.

By keeping the sample size small, for example, on the order of 10-60 ms for audio media, the overall time delay between participants is kept at a reasonable level. Typical audio media sample sizes are 10ms, 20ms, and 60ms, with 20ms possibly being the most common for Voice-over-IP (VoIP) applications. Hence, a voice source typically sends a packet every 20ms in order to provide a continuous audio signal to other participants. Typical video sample sizes are 33.33ms and 66.67ms, corresponding to typical video frame rates of 30 frames per second and 15 frames per second. In packet-switching wide-area networks (WANs), jitter compensation buffering may be employed by each participant to remove interpacket latency variations. A typical jitter compensation buffering strategy is to size it as a multiple of the sample size, e.g., 20ms. Hence, the latency that a signal packet incurs as it traverses the ring is primarily composed of jitter compensation buffering delay and link propagation delay. Packet processing time at each participant will be comparatively trivial on modern computing and network interface platforms. Thus, a conference with 10 participants interconnected by a WAN may incur a ring traversal latency in the range of approximately 200-250ms. For a ring architecture, this means that in this example the inter-participant delay for a media sample generated by a given participant will be minimum for the successor participant (approximately 20-25ms) and maximum for the predecessor participant (approximately 200-250ms). Latency in the 200-250ms range is considered to be the boundary for high-quality, highly interactive voice applications. This boundary may be significantly relaxed for many conferencing applications. For example, many business conference calls are not highly interactive when the conference format is one in which floor control is granted to individual speakers for long periods of time, such as during a panel discussion or when a business report is being presented - acceptable latencies in this environment may be in the range of 500ms to a few seconds. Also, contemporary voice chat systems that are options in popular Instant Messaging products, such as those available from America Online (AOL) and Microsoft, have latencies of a few seconds between two participants (which currently is the limit on the number of participants in a voice chat session supported by these two vendors because no mixing resources are used in the system). This is a walkie-talkie style communication in which the participants take turns. Hence, although in theory there is no limit placed on the number of participants in a conference system using a media-plane ring architecture, in practice the bound on the number of participants is determined by the context of the conference and may be as high as a few hundred participants for a conference with a low interactivity requirement. Furthermore, logic may be used to reduce latency; possibly the most effective latency reduction technique is to employ dynamic jitter compensation buffers, which adjust their size according to the measured jitter currently inserted by the network, which is often quite small (e.g., a few milliseconds). Dynamic jitter compensation buffers are an alternative to static buffers, which typically fix the buffer size to some multiple of the media sample size (e.g., some multiple of 20ms for voice applications). Thus, if jitter is low in the network, e.g., 1-2ms between each participant, and dynamic jitter compensation buffers are used, then a highly interactive conference (with a latency of approximately 200ms) could support several tens of participants, e.g., 50 participants.

Those skilled in the art may recognize that without controls, the size of the payload of a signal packet will grow with the number of participants, which may be problematic given that popular link and network protocols, *e.g.,* Ethernet and IP respectively, place hard limits on frame size and packet size respectively. Because of the current popularity of Ethernet as a link protocol, its frame payload size limit of 1500 bytes should be considered the practical limit for IP packet size in an IP-based conference system that is implemented as an embodiment of the present invention. A VolP packet contains an IP header, a UDP header, and an RTP header, which normally use a total of 40 bytes; hence the payload size limit is 1460 bytes. If a conference uses G.711 encoded, 20ms voice sampling, which translates to 160 bytes, then without controls the number of participants is limited to nine (9); however, some simple control mechanisms that are often used in conventional IP telephony and conferencing systems may extend this limit to as much as hundreds of participants. One control mechanism is for a participant to not insert a full sample if the audio activity is low or silent but instead indicate silence using a single bit or byte or by a null; such a mechanism is commonly available in conventional IP telephony systems, often for the purpose of conserving network bandwidth usage.

Another mechanism is to limit the number of participants that may insert a full sample into a signal packet payload to some small practical number, e.g., three participants. Such a mechanism has precedence in conventional conferencing systems; for example, in many conferencing systems that use centralized mixing, when more than three speakers are active simultaneously, the mixer mixes only the samples from the three loudest speakers and discards the samples from the other speakers. A local control protocol enforced at each participant would support this. That is, a given participant would not add its sample to the combined packet unless its sample were one of the three loudest talkers. The sample of the "quietest" loudest talker would be removed.

Another mechanism is to use small sample sizes, e.g., 10ms, which translates to 80 bytes for G.711 encoded audio.

Mixing is also more flexible in the present invention, when compared to conventional conferencing systems, because each participant independently determines how the samples from other participants are to be mixed for local playout. Recall that each participant inserts a local audio sample (which may be a silence indicator) into a signal packet payload; therefore, each participant also receives the unmixed audio samples from all of the other participants. A given participant may choose to mix only a subset of the other participants' samples and may apply different weighting factors to each sample according to some locally defined policies. In contrast, in many conventional conferencing systems, participants have little or no control over the mixing policy. Often, one or more participants' volumes may be louder than other participants. A common use of this control feature will be for a user to adjust the volumes of the participants to his/her preference. In the present invention, a participant may decide not to perform any mixing and instead select only one participant's sample for playout at any time by using some selection algorithm. Alternatively, if some participants do not or can not perform mixing, then some participant *pᵢ* that can mix may be designated to insert a mixed signal into the signal packets (and in addition to its local audio sample) which other non-mixing participants may copy and play out.

Local independent mixing is made even simpler in some embodiments of the invention in which not all participants are authorized to generate signals and to insert samples into a signal packet payload, and not all of those participants who may be authorized actually generate signals during a specific time interval. In this instance, these participants may completely omit signals in a signal packet payload or may transmit a shortened signal representing a "null set" of the input, and thereby represent in a very short signal that there is no substantive input from that participant during that time interval.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings, in which like elements are identified with like numerals:
Figure 1 illustrates a ring network of a plurality of participants in accordance with the invention.
Figure 2 is a flow chart showing the steps involved in the practice of the inventive method.
Figure 3 is a representation of the information contained in a signal used to practice the inventive method.

### DETAILED DESCRIPTION OF THE PRESENTLY PREFERRED EMBODIMENTS

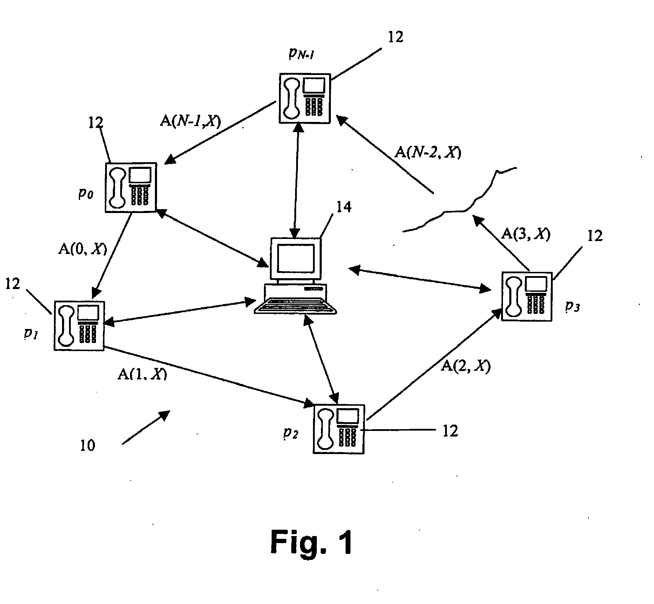

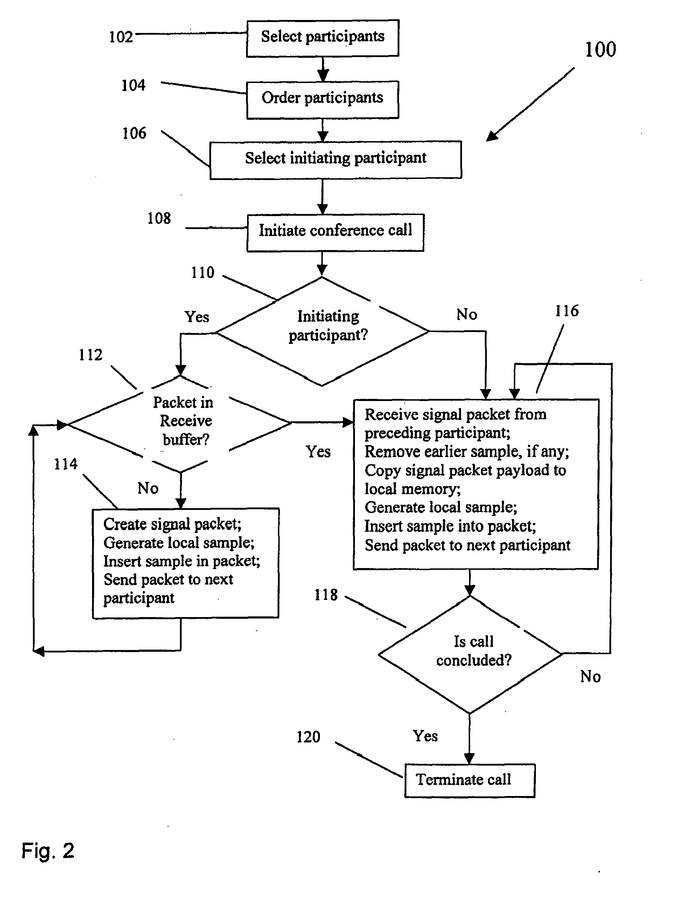

Figure 1 shows, generally at 10, a unidirectional ring in accordance with the invention. Ring 10 includes a plurality of participants (*pᵢ*) 12 who will participate in a conference call. Participants 12 may be located anywhere, for example, in a single office unit, in remote locations of a single office, in far-flung offices throughout the world, etc.. Each participant 12 is also connected to a central control 14, implying that a centralized architecture is used for the control plane, although this is not a requirement for the present invention. Ring 10 is an integral part of the inventive method, shown generally at 100 in Figure 2.

As shown in Figure 2, the first step (102) in method 100 is to select a plurality of N participants *pᵢ* for the conference call. Participants *pᵢ* are then ordered (104) to form ring 10 (Fig. 1) containing participants *p₀* through *p_{N-1}.* Participant *p₀* is identified (106) as the originating, or initiating, participant. The manner of ordering is not of great importance to method 100, and may be performed in any desired fashion. For example, participant *p₀* may be selected as the person (if any) who originated the conference call, as the participant who is deemed to be most likely to talk during the conference call, as the most senior participant in the conference call, or even at random. Once participant *p₀* is identified, the remaining participants are ordered as participants *p₁* through *p_{N-1}* in any desired fashion. For example, the participants may be ordered in the order in which they joined the conference call, in the order in which they are deemed likely to speak, by the amount each is expected to speak, by their relative seniority or by their geographic proximity to each other and/or to participant *p₀,* or by their network location proximity. Ordering the participants pᵢ by their geographic proximity to one another may have certain transmission benefits, e.g. reduced delay, in the case of large conference calls with multinational participants, but in most instances, where the conference call is likely to have only a few participants who may be geographically nearby to one another, geographic ordering would be expected to have a minimal impact on the overall effectiveness of the inventive method.

Each participant pᵢ is logically connected in ring 10 to a preceding participant *pᵢ₋₁* and to a succeeding participant *pᵢ₊₁,* with participant *p_{N-1}* being the preceding participant *pᵢ₋₁* for participant *p₀.* The direction of ring 10 (shown by the directions of the arrows between the participants 12 in Fig. 1), which corresponds to the direction of media flow, is established by the ordering of participants *p₀* through *p_{N-1}.*

Each participant pᵢ is also connected to central control 14, which manages the identity and order of participants *pᵢ* and other control-related information. By way of example, and not limitation, central control 14 may establish the protocols whereby certain participants pᵢ may be classified as contributing participants p_{c}, who are entitled to contribute input to the conference call, or whereby other features of the conference call (as discussed below) may be managed. Other control plane architectures may be used; the choice of control plane architecture is a mere matter of design choice.

Once the ordering of participants *pᵢ* in ring 10 is established, the conference call may be initiated (108) in any standard fashion. Each participant *pᵢ* is associated with means for outputting an audio signal, such as a broadcasting speaker on a speakerphone (*see, e.g.,* participants 12 in Fig. 1), the handset of a telephone or a personal computer. In applications which require it, video input may be generated by a camera (not separately shown) in known fashion. It is preferred that, in most instances, each participant *pᵢ* would also have means for accepting an input from that participant *pᵢ,* although that is not always required. In the case of a broadcast conference call, where, for example, a few participants may be speaking and a large number of participants may be listening (e.g., a panel discussion), not every participant may be expected (or even permitted) to contribute to the conference call. Thus, only designated contributing participants *p_{c}* would require means to accept an input at their location, while all other participants *pᵢ* need only have means at their location for outputting an audio and/or video signal.

Once the conference call is initiated (108), each participant executes similar logic, beginning with a self-identity check (110) as to whether the participant is the designated initiating participant *p*₀. If the participant is *p₀,* then the receive buffer is checked for a signal packet as a test to determine whether or not a new signal packet needs to be generated (112). If the receive buffer is empty, then a new signal packet is created (114). During the first execution of this logic (114), a locally generated input sample S(0,0) is created by the means at that participant's location during a first local time interval to. The input may be generated in any known fashion, such as by the use of a G.711 codec. For the notation S(*x,y*), the x parameter indicates the index of the participant pₓ, and the y parameter indicates the index of the local time interval, which corresponds to the audio sample size (e.g., 20ms). The concatenation of all of the local time intervals for a given participant represents the entire duration of the conference call, or more precisely, the entire duration of a given participant's participation in the conference call. Note that the actual "wall clock" time each participant generates a local sample is immaterial, i.e., a global synchronized clock is not required.

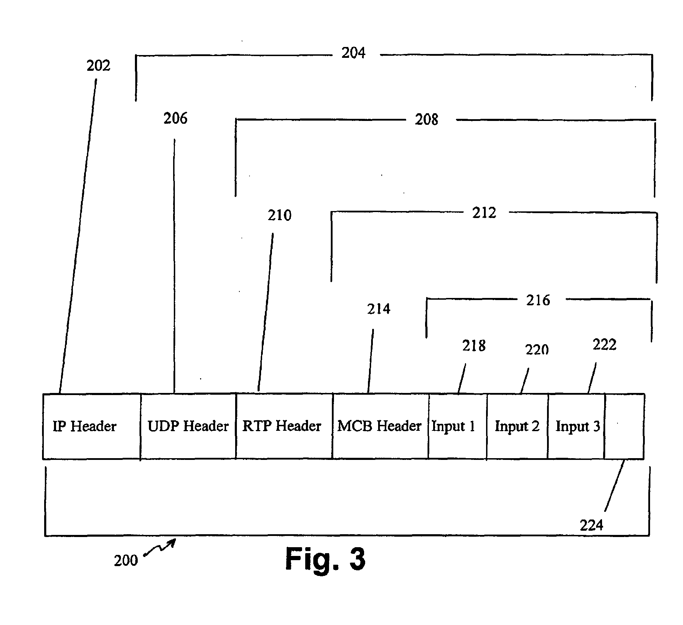

As aforementioned, when initiating participant *p₀* gathers the first input S(0,0), participant *p₀* creates (114) a signal 200. Signal 200 is shown in Figure 3.

Signal 200 is generally referred to as a "packet", and that term will be used herein to refer generally to signal 200. A packet, such as packet 200, is an electronic signal sent along a network having a prescribed format. In this instance, the format includes a first portion of the signal in which control information is contained, referred to as the "header", and a second portion of the signal in which the information being sent (the "payload") is contained. The payload is, essentially, the portion of the signal which is of substantive interest to the recipient, while the header contains control information, such as origin, destination, format, size and other necessary information. In the preferred embodiment, the signal may include a series of nested headers (described below), and so the actual payload, i.e., the information corresponding to the actual signal which is to be generated by the participants 12, may be deep inside the outermost packet. In the preferred (but by no means only) embodiment of the invention, ring 100 is formed over the Internet, and the conference call is a voice conference with no video component. Thus, the preferred embodiment contemplates the use of a standard Voice-over-Internet-Protocol (VoIP) packet, which comprises an Internet Protocol (IP) header 202 and an IP payload 204. IP header 202 includes information needed for controlling the transmission of the package through the VolP network, with IP payload 204 containing the information used by the recipient of packet 200.

In this configuration, IP payload 204 contains a signal used to control the local recipient of the information, the participant *pᵢ,* as well as provide the information needed for that participant *pᵢ* to output the desired portion of the conference call. Participants *pᵢ* may use any desired transport-level protocol for handling the connection between participants and directing signals upon receipt to the proper applications, usually one of User Datagram Protocol (UDP) and Transmission Control Protocol (TCP). In the preferred embodiment, UDP is used, although the inventive method is equally applicable to environments in which TCP is used. The UDP signal (packet) contains a header and payload (called a "datagram" in UDP terminology), and so the IP payload 204 consists of a UDP packet 204, made up of a UDP header 206 and a UDP payload 208.

UDP header 206 provides the information needed to handle the information received in well-known fashion, and need not be detailed here. UDP payload 208 contains the substantive information which is desired to be transmitted.

However, UDP header 206 does not contain all of the information needed to permit the participant *pᵢ* to output the desired output. Thus, further control information must be provided within UDP payload 208, and so UDP payload 208 is further comprised of a Real-Time Transport Protocol (RTP) header 210 and an RTP payload 212, which contains the signal(s), or waveform(s), or sample(s) to be output by the participant *pᵢ.* The RTP header 210, however, does not contain sufficient control information for the present invention, i.e., it does not contain information about the structure of the waveforms in the RTP payload. For example, it would not inform the receiving participant *pᵢ* about which waveforms in the payload were generated by which participants, nor would it inform the participant *pᵢ* about the location of waveforms in the RTP payload. This information is contained within a further nested signal, for what the inventors refer to as a "Multi-Channel Bundling" (MCB) signal 212. MCB signal 212 has an MCB header 214 and an MCB payload portion 216. MCB header 214 describes the structure of the MCB payload, including the identities of the various contributing participants *p_{c}* who have placed waveforms 218, 220, 222 in MCB payload 216, the location of each waveform in MCB payload 216, and possibly other information useful to the application, such as media type and/or codec type, in case multiple media types and/or codec types are used by the conference participants.

This is the total information contained in signal 200.

Even though reference is made to a computer as the recipient (participant), the same can be accomplished by the use of telephones with suitable hardware and software to accommodate the required protocols, and one of ordinary skill in the art would understand how to accomplish the use of computers and/or telephones as participants *pᵢ* in ring 10 without undue experimentation.

In some embodiments, signal 200 may include a portion 224 containing a message from one participant to another. That message may be private, in that it is only accessible to the intended recipient(s), or may be public, in that it is intended for general broadcast, all at the request of the participant who generated the portion 224. Portion 224 may be in the form of a text message, an SMS message, or a "whispered" voice message, or in any other desired form. In this context a "whispered" voice message is a signal which is intended to be available only to some subset of the participants, i.e., it is a private message that only a few participants are meant to hear or view. The whispered message may be generated at the recipient's location in a manner which is different than that of the remainder of the conference call, so that the recipient knows that the whispered message is not available to the other participants in the conference call. A "different" manner of generation of the message may mean that the message preceded by a signal (such as a distinctive audio alert) setting it apart from the remainder of the conference call, or may be generated at a volume different from that of the remainder of the conference call. One method of ensuring the privacy of the whispered message is to use an encryption protocol (such as a Public Key Encryption protocol) to encrypt a whispered conversation, in accordance with known encryption protocols, as desired in the particular application in which the inventive method and/or signal may be used. The control plane or information in the MCB header (214) may be used to indicate to the participant(s) if a particular media sample should receive special treatment, e.g. as a whisper.

Portion 224 may comprise, for example, an invitation from the participant who created it to one or more of the remaining participants to conduct a private chat, either by voice or through text or SMS messaging, for example, during the course of the conference call. Other examples of the use of such messages would be to provide side comments to the substance of the conference call, provide instructions to specific participants, or otherwise engage in private talk unrelated to the general subject of the conference call.

Returning to Figure 2, once the initiating participant *p₀* generates (step 114) the first signal 200, that signal becomes part of a stream of signals traveling around ring 10. Signal 200 starts as a signal A(0,0) (Fig. 1), having an MCB payload 216 (Fig. 3) that contains sample S(0,0) (218) and is transmitted (114) to the next succeeding participant *p₁.* Under an assumption that the time for the signal packet A(0,0) to traverse the ring is greater than the sampling interval, then while A(0,0) is traversing the ring (116), participant *p₀* is generating other signal packets A(0,1), A(0,2)... containing samples S(0,1), S(0,2)... respectively. For example, if the sampling interval is 20ms, and the ring traversal time is 200ms, then *p₀* will generate ten (10) signal packets A(0,0), A(0,1)...A(0,9) before it receives A(*N-1,0*), which began the ring traversal as A(0,0), from participant *p_{N-1}.* For the purposes of this description, we will identify as *M* the number of signal packets generated by *p₀* while A(0,0) is traversing the ring, which means that when *p₀* receives A(*N-1*,0), it has generated sample S(0,*M*), and after removing S(0,0) from A(*N-1*,0) in Step 116, it will combine S(0,*M*) with A(*N-1*,0) to form A(0,*M*). As aforementioned, *p₀* detects when *A*(0,0) has traversed the ring by checking if *A*(*N-1*,0) is in its receive buffer (112).

Once the first ring traversal has occurred, participant *p₀* no longer must generate new signal packets and can now behave similarly to all of the other participants, as in Step 116.

The first execution of Step 116 occurs at *p₁* and immediately after *p₀* has sent A(0,0) to participant *p₁.* If participant *p₁* is a contributing participant *p_{c},* then participant *p₁* also has a sample S(1,0) to contribute. Once signal A(*0,0*) reaches contributing participant *p₁,* therefore, participant *p₁* gathers its sample S(*1,0*) (116), which corresponds to the second MCB payload 220 (Fig. 3). Before inserting S(1,0) into signal packet A(0,0) to form A(1,0), however, *p₁* checks if it has a sample in A(0,0) that it inserted when A(0,0) previously traversed the ring, which it does not in the case of the first ring traversal by a signal packet. Participant *p₁* then copies the contents of A(0,0) into local memory, inserts S(1,0) into A(0,0) to form A(1,0), which has two MCB payloads 218, 220, and sends A(1,0) to participant *p₂.* If the signal packet is traversing the ring for the second time, then upon reception from *p₀* of the signal packet identified as A(0,*M*), *p₁* removes S(1,0) from A(0,*M*), copies the contents of A(0,*M*) into local memory, inserts S(1,*M*) to form A(1,*M*), and sends A(1,*M*) to participant *p₂.* S(1,0) is removed because *p₁* does not need to play that portion (MCB payload 220) of combined signal A(0,*M*) which corresponds to the sample S(1,0) originated by participant *p₁.* Also, all the other participants have already received sample S(1,0) so there is no need to distribute it again to the other participants.

In the preferred embodiment, the removal of S(1,0) is performed at the location of participant *p₁,* but it may also be performed at the location of participant *p₀, i.e.,* the preceding participant, before combined signal A(0,*M*) is transmitted to participant *p₁,* as a mere matter of design choice. In general, a signal originally generated by participant *pᵢ* may be removed from a signal packet by participant *pᵢ₋₁,* but the preferred embodiment is that participant *pᵢ* will be responsible for removing samples it inserted into a signal packet.

In the general case for step 116, participant *pᵢ* receives a signal packet A(*i-1, KM+j*) from participant *pᵢ₋₁,* where *K* indicates the number of ring traversals that have occurred, and where j is some value between 0 and M-1, removes sample *S(i, (K-1)M+j)* if it is in the packet, inserts S(*i*, *KM+j)* to form A(i, *KM+j),* and sends *A(i, KM+j)* to participant *pᵢ₊₁.* Next in Step 118, participant *p₁* checks if the call has concluded; if not, then Step 116 is executed again, otherwise it terminates the call (120).

In this fashion, each participant *pᵢ* is able to generate a sample (audio only or audio/video, as appropriate) corresponding to the intended received portion of the conference call, and is able to pass along on ring 10 the entire conference call, efficiently, and without regard to the number of participants *pᵢ* and terminating (120) when the call is over.

Those skilled in the art may recognize that because of packet-flow jitter introduced by the underlying network, the time to traverse the ring may vary for each signal packet A(*X, Y*), which raises the issue of selecting a value for *M.* The aforementioned use of jitter compensation buffers at each participant will stabilize the ring traversal time, but buffering will not necessarily drive the jitter to zero. Hence, there is the possibility that the jitter across the ring exceeds the sampling interval, in which case additional jitter compensation buffering may be used at participant *p₀* such that a fixed value of *M* may be chosen so that jitter compensation buffer overflows and underflows will not occur, and so that *M* will not have to change during the conference call.

If the call has a very large number of contributing participants p_{c}, there may be a noticeable delay in the generation of an output at location *pᵢ₋₁* compared to location *pᵢ* because of the time it takes for the combined signal to travel about ring 10. It is well-known by those skilled in the art that increases in delay correspond to decreases in the interactivity of the conference, and therefore a decrease in the quality-of-experience of the conference for human users. The degree of interactivity that is necessary for a good quality-of-experience depends on the conference context, but in general, telephony systems should be engineered to reduce delays as much as is practical. Ring traversal delay is primarily composed of packetization delay, jitter compensation buffering delay, and link propagation delay. There are several preferred modifications of the inventive method which may ameliorate the effects of these delay sources.

First, the length of each sampling time interval *tₓ* may be kept small, so that the delay in adding the inputs S(*i, X*) is minimized. This type of delay is often referred to as packetization delay. Common sampling time intervals include 10ms, 20ms, and 60ms for voice, with 20ms being the most common. Therefore, selecting a 10ms sampling interval is preferable to selecting a 20ms or 60ms sampling interval. For the present invention, however, it is possible to organize timing and buffering such that packetization delay may be incurred only at the designated source participant *p₀,* and furthermore may only be incurred during the first ring traversal of a signal packet.
Jitter compensation buffering is necessary in many packet-switched networks. When packets are transmitted between participant *pᵢ* and participant *pᵢ₊₁, pᵢ* will send the packets on a regular schedule corresponding to the sampling interval, i.e, the time between successive packet transmissions is fixed. The packet arrival process at *pᵢ₊₁* will not necessarily be regular, *i.e.* the packet flow has non-zero jitter, because most packet-switching networks do not provide a time-deterministic packet forwarding service. Because the information in the samples needs to be played out according to the regular schedule and forwarded to the next participant according to a regular schedule, it is necessary to buffer the packets in a jitter compensation buffer. To eliminate jitter, the buffer size should be twice the maximum jitter value. For logic simplicity, many telephony systems choose a buffer size that is an integer multiple of the sampling interval. Thus, if a conference has ten participants, and all the participants in the ring use a buffer size of, e.g, 20ms, then the contribution of jitter compensation to the overall ring traversal delay is the product of the number of participants and the buffer size, which in this case is 200ms. Because jitter is often small, one method for reducing delay due to jitter compensation buffering is to use dynamic jitter buffers, which adjust their size in accordance with measured or estimated jitter. Thus, if the average jitter between participants is 1 ms, corresponding to an average jitter buffer size of 2ms, then the contribution of jitter buffering to the ring traversal delay is 20ms for a 10-participant conference, which compares very favorably to the case when fixed, 20ms buffers are used, resulting in a contribution of 200ms.

Link propagation delay is the time necessary to transmit a signal across a network link. For a wire or optical link, the propagation delay is approximately the product of the link length and the speed of light in a vacuum. For concreteness, consider that a typical design heuristic for the propagation delay of packets that traverse the continental United States of America from the East Coast to the West Coast is 30ms. To reduce the contribution of propagation delay to ring traversal delay, the ordering of the participants may be selected in such a way as to minimize or otherwise reduce the distance (either physical or logical) between successive participants. For example, consider a four-party conference call in which two participants *p_{A}* and *p_{B}* are located in the same office on the east coast of the United States, and two participants *p_{C}* and *p_{D}* are located in the same office on the west coast of the United States. If the ordering of the participants is *p_{A}, p_{C}, p_{B}, p_{D},* then the ring traverses the United States four times; if instead the ordering is *p_{A}, p_{B}, p_{C}, p_{D},* then the ring traverses the United States only twice, providing a reduction of approximately 60ms in the overall ring traversal delay.

In other embodiments of the invention, other modifications are possible. For example, it is possible to weight the output associated with an input from any one or more participants *p_{iw},* so that their output is generated at a higher (or lower) volume depending upon their perceived importance to the conference call. This weighting may be performed prior to the conference call by central control 14 (Fig. 1), in which case it may be the same for each participant *p_{iW},* or may be established or changed during the conference call, as a matter of design choice. It may even be made on an individual basis by individual participants based upon their personal preferences, or determined by a characteristic of the input received from the weighted participant *p_{iW},* such as the volume of the audio input from the weighted participant *p_{iW}.* In this fashion, for example, a very loud speaker may have his or her generated input be softened so as not to drown out the remaining contributing participants, or a contributing participant who speaks softly may have his or her output boosted so as to be audible among the remaining voices. This weighting may be pre-set prior to the conference call, or may be variable in accordance with a predetermined formula, such as with respect to the relative loudness of any of the contributing participants with respect to the remainder of the contributing participants at any point in time.

In extreme cases, the weighting may even be permitted to completely exclude certain participants *pₚ* from being contributing participants *p_{c}, e.g.,* the conference controller might elect to mute certain speakers, or so that only certain preferred participants may be allowed to be a contributing participant, all as a matter of design choice.

The weighting may also be performed while the conference call is occurring so that individual participants may determine during the conference call that certain participants have something especially interesting to say, and so have their "weight" increased, or *vice-versa.* This may be useful in the context of a project meeting which may stretch over the course of an entire day (or longer), where various participants may be working on one aspect of the project at one time, while other participants are working on another aspect. Each respective group could increase the relative volume of the output of the members of their own group, and decrease the volume of the others', while a supervisor who needed to hear both groups could make them equal, or tune back and forth.

Another "weighting" feature may be used in environments in which the equipment used has stereo output capability, so that certain participants may weight the output of other participants, so that they sound as though they are in a specific physical location with respect to the listening participant. By way of example, if properly weighted, participant *p₃* could cause the output from participant *p₇* to sound as though *p₇* was seated to the immediate right of participant *p₃,* while participant *p₈* would sound as though participant *p₈* were seated at the far end of a long conference table, regardless of the actual physical proximity of those participants. Another participant *P₄* may have different preferences than *p₃* and, for example, may choose to seat *p₈* next to it and *p₇* at the far end of a conference table.

Thus, while we have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method of linking a plurality of participants for a conference call, comprising the steps of:
a) establishing a plurality of *N* participants *pᵢ* to participate in said conference call;
b) selecting a first participant as an initiating participant *p₀* from said plurality of N participants *pᵢ*;
c) ordering the remainder of said plurality of N participants *pᵢ,* so that said remainder of said plurality of N participants *pᵢ,* are identified as participants *p₁* through *p_{N-1}*;
d) connecting said plurality of N participants *pᵢ* in a ring whereby each of said plurality of N participants *pᵢ* is connected to a preceding participant *pᵢ₋₁* and a succeeding participant *pᵢ₊₁,* whereby said initiating participant *p₀* is connected to said participant *p_{N-1}* as its preceding participant and to participant *p₁* as its succeeding participant, thereby completing said ring;
e) accepting an input S(C, 0) from contributing ones of participants p_{c} during a first time interval to;
f) transmitting an initial input S(0, 0) from said initiating participant *p₀* to its succeeding participant *p₁,* as a first signal A(0, 0);
g) combining said initial input S(0, 0) from said initiating participant *p₀* with an input S(1, 0) accepted by the next succeeding participant *p₁* if said participant *p₁* is a contributing participant p_{c}, thereby forming a first combined signal A(1,0);
h) transmitting said first combined signal A(1, 0) to the next succeeding participant p₂;
i) combining said first combined signal A(1, 0) with the input S(2,0) accepted by said next succeeding participant *p₂,* if said next succeeding participant is a contributing participant *p_{c},* to form thereby a second combined signal A(2,0) representing a combination of signals from each preceding contributing participant *p_{c}* starting at said initiating participant *p₀* and including said next succeeding participant *p₂,* combined in accordance with a predetermined formula;
j) repeating steps h) and i) at successive participants pᵢ until a combined signal A(N-1, 0) is transmitted from participant *p_{N-1}* to said initiating participant *p₀,* said combined signal A(N-1, 0) representing a combined signal containing all of the desired inputs S(C*ᵢ*, 0) of all contributing participants p_{c} from among participants *p₀* through *p_{N-1},* combined in accordance with said predetermined formula;
k) removing input S(0, 0) from said combined signal A(N-1, 0) after said signal A(*N-1*, 0) is received by participant *p_{N-1}*;
l) replacing input S(0, 0) in said combined signal A(*N-1*, 0) with an input S(0,*M*), where *M* represents a time interval *t_{M}* subsequent to said first time interval to, after said signal A(*N-1*, 0) is received by participant *p₀*; and
m) repeating steps h), i), j), k) and I) until said conference call is completed.

2. The method of claim 1, further comprising the step of playing an audio signal corresponding to said combined signal A(*i, X*) through an audio speaker associated with each participant *pᵢ.*

3. The method of claim 2, wherein said predetermined formula includes having certain participants as preferred participants *pₚ,* whereby only signals accepted from said preferred participants *pₚ* are played.

4. The method of claim 3, whereby at least some of said preferred participants *pₚ* are selected prior to the initiation of said conference call.

5. The method of claim 3, whereby the preferred participants *pₚ₁* selected for playing audio signals at an individual participant's *pᵢ* audio speaker may differ from the preferred participants *pₚ₂* selected for playing at a different audio speaker associated with a different participant *pⱼ.*

6. The method of claim 5, wherein at least some of said participants *pᵢ* may select the preferred participants *pₚ* whose input is selected for playing at said at least some of said individual participants' *pᵢ* individual audio speaker.

7. The method of claim 6, further comprising the step of permitting a participant to solicit a private chat with one or more of the remaining participants during said conference call, thereby establishing a sub-conference call within said conference call.

8. The method of claim 7, wherein said step of permitting a participant to solicit a private chat includes the step of permitting said participant to send a private message to said one or more of the remaining participants, wherein said private message is of a type selected from the group consisting of a text message, an SMS message and a whispered voice message.

9. The method of claim 8, wherein said conference call is established on an audio communications network having at least first and second channels; wherein said conference call is established on said first channel; and wherein said message is sent on said second channel.

10. The method of claim 2, further comprising the step of weighting the audio signal played from certain participants *p_{iW}* so that the audio signals from said certain participants *p_{iw}* are played at an audio level different from that of at least one of the remaining participants.

11. The method of claim 10, wherein the weight associated with the audio signal played from any participant *p_{iW}* may be selected by at least some of the remaining participants.

12. The method of claim 10, wherein the weight associated with the audio signal played from any participant *p_{iw}* is determined by a characteristic of the input S(*i*,*X*) associated with any participant *pᵢ.*

13. The method of claim 12, wherein said characteristic is the relative loudness of the input S(*i, X*) compared to other inputs in said combined signal A(*i, X*).

14. The method of claim 10, wherein the weight associated with the audio signal played from any participant *p_{iW}* is selected according to a second predetermined formula.

15. The method of claim 1, whereby said initiating participant *p₀* is selected based on an identification of which participant *pᵢ* is responsible for initiating said conference call.

16. The method of claim 1, whereby said initiating participant *p₀* is selected based on an identification of which participant pᵢ is determined to be most likely to speak during said conference call.

17. The method of claim 1, wherein said ordering of said remainder of said participants *pᵢ* is performed based upon a logical ordering of the respective distances between said remainder of said participants *pᵢ.*

18. The method of claim 1, wherein said ordering of said remainder of said participants pᵢ is performed based upon an ordering of which of said participants *pᵢ* is determined to be most likely to speak during said conference call.

19. The method of claim 1, wherein at least one of said participants pᵢ is a non-mixing participant *p_{NM},* that does not mix signals at non-mixing participant's *p_{NM}* location, and said method further comprises the step of: transmitting to said non-mixing participant *p_{NM}* a premixed signal A(*NM-1,* X) from a participant *pNM-1* whereby said non-mixing participant *p_{NM}* may output said premixed signal A(*NM-1,X*) without the need to mix individual signals.

20. The method of claim 1, further comprising the step of including identifying information in at least some combined signals A(*i, X*) to identify which participant *pᵢ* is the source for an input S(*i, X*).

21. The method of claim 20, wherein said identifying information is contained within a header in said combined signal A(*i*, *X*).

22. The method of claim 1, wherein, if a participant *pᵢₛ* is substantially silent during a particular time interval, no signal is accepted from said participant *pᵢₛ* for said time interval.

23. The method of claim 1, wherein the length of each time interval *tₓ* is fixed.

24. The method of claim 23, wherein the length of each time interval is in the range of from about 5 ms to about 60 ms.

25. The method of claim 24, wherein the length of each interval is about 20 ms.

26. The method of claim 1, wherein the length of each interval *tₓ* varies over time.

27. The method of claim 1, wherein said input S(*i*, *X*) includes a video signal.

28. The method of claim 1, wherein a signal is removed from said combined signal A(*i,* X) by participant *pᵢ* after receipt of said combined signal A(*i,* X) thereby.

29. The method of claim 28, wherein said signal removed from said combined signal A(*i*, X) by participant *pᵢ* is a prior signal from said participant *pᵢ.*

30. The method of claim 28, wherein said signal removed from said combined signal A(*i*, X) by participant *pᵢ* is a prior signal from a succeeding participant *p_{i+Y}* to participant *pᵢ,* where Y is a positive integer no greater than *N-1 .*

31. A computer data signal embodied in a transmission medium, for providing signals in a conference call over a network involving a plurality of participants *pᵢ,* said computer data signal comprising:
a data packet having:
a payload carrying information containing an input S(*i*, X) from a participant pᵢ during a time interval *tₓ*; and a portion carrying information identifying the specific participant pᵢ with whom said input S(*i*, X) originated;
wherein said data packet contains inputs from at least two participants pᵢ.

32. The computer data signal of claim 31, in which said portion of said packet is contained in a header portion of said computer data signal.

33. The computer data signal of claim 31, in which said payload contains at least one of an audio input and a video input.

34. The computer data signal of claim 31, further a second portion carrying a message for at least one of said participants *pᵢ.*

35. The computer data signal of claim 34, wherein said message is selected from the group consisting of a text message, an SMS message and a whispered voice message.

36. The computer data signal of claim 34, wherein said message is an invitation to establish a private chat during said conference call.
